Europäisches Patentamt

European Patent Office

Office européen des brevets

(11) Publication number: **0 644 224 A1**

## EUROPEAN PATENT APPLICATION

(21) Application number: 94114791.0

(51) Int. Cl.6: **C08J 3/12**, //C08L101:02

(22) Date of filing: **20.09.94**

(30) Priority: **20.09.93 JP 233638/93**

(43) Date of publication of application:
**22.03.95 Bulletin 95/12**

(84) Designated Contracting States:
**DE GB**

(71) Applicant: **MITSUBISHI PETROCHEMICAL COMPANY LIMITED**
**2-5, Marunouchi 2-chome**
**Chiyoda-ku**
**Tokyo-to (JP)**

(72) Inventor: **Tsuchiya, Hiroyoshi, Mitsubishi Petrochem.Co.Ltd.**
**Yokkaichi Sogo Kenkyusho,**
**1, Toho-cho**
**Yokkaichi-shi,**
**Mie-ken (JP)**
Inventor: **Kato, Koji, Mitsubishi Petrochem.Co.Ltd.**
**Yokkaichi Sogo Kenkyusho,**
**1, Toho-cho**
**Yokkaichi-shi,**
**Mie-ken (JP)**

Inventor: **Fukushima, Kenichi, Mitsubishi Petrochem.Co.Ltd.**
**Yokkaichi Sogo Kenkyusho,**
**1, Toho-cho**
**Yokkaichi-shi,**
**Mie-ken (JP)**
Inventor: **Ito, Kiichi, Mitsubishi Petrochem.Co.Ltd.**
**Yokkaichi Sogo Kenkyusho,**
**1, Toho-cho**
**Yokkaichi-shi,**
**Mie-ken (JP)**
Inventor: **Sakakura, Yasuyuki, Mitsubishi Petrochem.Co.Ltd.**
**Yokkaichi Sogo Kenkyusho,**
**1, Toho-cho**
**Yokkaichi-shi,**
**Mie-ken (JP)**

(74) Representative: **Hansen, Bernd, Dr. Dipl.-Chem. et al**
**Hoffmann, Eitle & Partner,**
**Patentanwälte,**
**Arabellastrasse 4**
**D-81925 München (DE)**

(54) **Process for granulating highly water-absorptive resin.**

(57) There is provided a process for granulating a highly water-absorptive resin, comprising the steps of: placing 100 parts by weight of a highly water-absorptive resin having a crosslinked structure comprising as its constituent a carboxyl group and/or a carboxylate group in a low-speed rotary paddle mixer; dropwise adding and mixing 0.05 to 10 parts by weight of a water-soluble or water-dispersible polymer compound, in the form of an aqueous solution or a water dispersion containing water in such an amount as to bring the water content of the resin to 30 to 70%, with the resin in the presence of 0.1 to 10 parts by weight of a fine powder of an insoluble inorganic material by means of the mixer; and drying the mixture in a tumbling drier.

## BACKGROUND OF THE INVENTION

### Field of the Invention

This invention relates to a process for granulating a highly water-absorptive resin. More particularly, this invention relates to a process for granulating a highly water-absorptive resin, which enables the production of resin granules having an appropriate granule size and a narrow granule size distribution in a high yield.

### Background Art

Highly water-absorptive resins have hitherto been used in various applications including paper diapers, sanitary goods, disposable cleaning cloth and other goods in sanitary fields, water retentive materials, soil conditioners and other materials in agricultural fields, sludge coagulants, dew condensation preventive materials for building materials and dehydrating agents for oils. Various highly water-absorptive resins are known in the art, and examples thereof include those comprising a crosslinked polyacrylic acid salt, a crosslinked graft copolymer of starch and an acrylic acid salt, a saponified product of a crosslinked graft copolymer of starch and acrylonitrile and a saponified product of a crosslinked copolymer of an acrylic ester and vinyl acetate. These highly water-absorptive resins generally contain a considerable amount of a fine powder having a particle size of not more than 100 mesh. This raises the following problems upon handling of the resins.

(1) Dust occurs which worsens working environment.

(2) The fluidity is so low that the phenomena of bridging and clogging often occur.

(3) Upon contact with a liquid, the resin is likely to form a lump.

Various methods for solving these problems have been proposed in the art, and examples thereof include a method in which the fine powder is removed, a method in which granulation of a resin is carried out by using an agglomerating agent, such as an organic binder, in combination with water or using an aqueous solution containing an agglomerating agent, such as an organic binder (see Publication of the Translation of International Patent Application No. 501492/1991 and Japanese Patent Laid-Open Nos. 308820/1990 and 137129/1991) and a method in which an inorganic powder is added to a resin in the presence of a surfactant to carry out granulation of the resin (see Japanese Patent Laid-Open Nos. 132936/1987 and 28492/1990 and Japanese Patent Publication No. 26204/1991).

However, the removal of fine powder requires a separator and the separated fine powder should be disposed of, which is disadvantageous from the viewpoint of economy.

On the other hand, the granulation of a resin by the use of an agglomerating agent in combination with water or by the use of an aqueous solution containing an agglomerating agent has the drawback that since the resin to be granulated has a highly water-absorptive property and hence rapidly absorbs water or the aqueous solution, homogenous dispersion and mixing of water or the aqueous solution in the resin is difficult and large lumps having a high density are likely to form, which makes it difficult to prepare uniform granules.

With the method of granulating a resin by adding an inorganic powder to the resin in the presence of a surfactant, there is the problem that a uniform addition of the substantially insoluble inorganic powder can be conducted with difficulty whereby the granulated product is likely to be uneven in the granule diameter, bulk density and the like. Further, the mechanical strength of the granulated product is so poor that it breaks easily.

Besides the above described methods, there are also known a method in which an aqueous solution is sprayed on the surface of a water-absorptive resin powder and granulation is carried out with a high-speed agitation type granulator or the like (see Japanese Patent Laid-Open No. 97333/1986) and a method in which a dried resin is added to a solution containing a water-absorptive resin and the mixture is heat-dried with agitation in a drier (see Japanese Patent Laid-Open No. 117551/1982).

However, the method described in Japanese Patent Laid-Open No. 97333/1986 has the drawback that a slight variation in the size of droplets and the spraying conditions during the spray of the aqueous solution unfavorably results in the formation of granules having a broad granule size distribution and the considerable adhesion of the resin onto the inner wall of the granulator which is remarkably detrimental to workability.

The method described in Japanese Patent Laid-Open No. 117551/1982 has the drawback that upon the drying with agitation a fine powder can be formed again due to friction between granules, so that it is difficult to prepare a homogeneously granulated product.

As described above, all of the known methods for granulating a highly water-absorptive polymer involve drawbacks such as uneven granulation (formation of lumps) and low strength of the resulting granules.

It is therefore an object of the present invention to provide a process for granulating a highly water-absorptive resin, which can provide uniform granules having an appropriate diameter and a high strength in a high yield.

## SUMMARY OF THE INVENTION

The present inventors have now found that the above object can be attained by mixing a highly water-absorptive resin with specific amounts of an inorganic powder, a water-soluble or water-dispersible polymer compound and water and drying the mixture, and by conducting the mixing and drying steps in a specific manner.

Thus, the process for granulating a highly water-absorptive resin according to the present invention comprises the steps of: placing 100 parts by weight of a highly water-absorptive resin having a crosslinked structure comprising as its constituent a carboxyl group and/or a carboxylate group in a low-speed rotary paddle mixer; dropwise adding and mixing 0.05 to 10 parts by weight of a water-soluble or water-dispersible polymer compound, in the form of an aqueous solution or a water dispersion containing water in such an amount as to bring the water content of said resin to 30 to 70%, with said resin in the presence of 0.1 to 10 parts by weight of a fine powder of an insoluble inorganic material by means of said mixer; and drying the mixture in a tumbling drier.

The process of the present invention successfully achieves uniform granulation of a highly water-absorptive resin powder by means of an aqueous solution, which has hitherto been unattainable due to the highly water-absorptive property of the resin. According to the process of the present invention, uniform granules having an appropriate granule size and a high strength can be produced in a high yield.

## BRIEF DESCRIPTION OF THE DRAWINGS

Fig. 1 is a schematic diagram of a device for measuring the rate of water absorption (under atmospheric pressure) of a highly water-absorptive resin powder and a granulated product thereof; and

Fig. 2 is a schematic diagram of a device for measuring the rate of water absorption (under pressure) of a highly water-absorptive resin powder and a granulated product thereof.

In the drawings, reference numeral 1 indicates a highly water-absorptive resin powder or a granulated product thereof (1 g); reference numeral 2, a support plate with a small hole; reference numeral 3, a nonwoven fabric; reference numeral 4, physiological saline; reference numeral 5, a burette; reference numeral 6, a rubber stopper; reference numerals 7 and 8, valves; reference numeral 9, an air inlet; reference numeral 10, a guide; and reference numeral 11, a weight.

## DETAILED DESCRIPTION OF THE INVENTION

⟨Highly Water-Absorptive Resin⟩

In the process of the present invention, any highly water-absorptive resin can be used, irrespective of the type of the polymer and the polymerization method for preparing the polymer, as long as it comprises as its constituent a carboxyl group and/or carboxylate group. More specifically, preferred examples thereof include a crosslinked poly(meth)acrylic acid salt, a crosslinked graft copolymer of starch and a (meth)acrylic acid salt, a saponified product of a crosslinked graft copolymer of starch and acrylonitrile, a saponified product of a crosslinked copolymer of an acrylic ester and vinyl acetate, a crosslinked copolymer of a (meth)acrylic acid salt and a (meth)acrylic ester, a crosslinked copolymer of a (meth)acrylic acid salt and acrylamide, and a hydrolyzate of a crosslinked polyacrylonitrile. In addition to the above, polyethylene oxide crosslinked with acrylic acid, a crosslinked sodium carboxymethyl cellulose, a crosslinked copolymer of a salt of maleic anhydride and isobutylene, and a copolymer of a (meth)acrylic acid salt and a comonomer such as a maleic acid salt, an itaconic acid salt, 2-acrylamide-2-methylsulfonic acid, 2-(meth)-acryloylethanesulfonic acid or 2-hydroxyethyl (meth)acrylate can be mentioned. The carboxylate group contained in the highly water-absorptive resins may be of the type of an alkali metal salt, an alkaline earth metal salt, an ammonium salt, or the like. Of these, an alkali metal salt is preferred.

The highly water-absorptive resin can be obtained, in general, by an aqueous solution polymerization method, a solution polymerization method, or a reverse-phase suspension polymerization method. These methods are described in more detail, for example, in Japanese Patent Publication No. 25045/1985,

3

Japanese Patent Laid-Open Nos. 87702/1986, 158210/1982 and 21405/1982, Japanese Patent Publication No. 46199/1978, and Japanese Patent Laid-Open Nos. 71907/1983, 84304/1980, 91837/1981, 49002/1990, 157513/1986 and 62807/1987.

When the polymerization is completed, the above-described highly water-absorptive resin is, in general, obtained as a water-containing gel. This water-containing gel is usually dehydrated as it is, or by azeotropy with an inert solvent, and finally dried. The resultant is subjected, according to necessity, to pulverization, classification or the like to obtain a final product. The highly water-absorptive resin for use in the present invention may be one which has undergone a surface crosslinking or modification treatment during the above-described production processes, or after the final product is obtained. The surface crosslinking may be carried out with a crosslinking agent having two or more functional groups which can react with a carboxyl group and/or a carboxylate group, for example, a polydiglycidyl ether compound, a haloepoxy compound, a polyaldehyde compound or an isocyanate compound. The surface modification treatment may be carried out with an organometallic coupling agent, such as a silane coupling agent, a titanium coupling agent or an aluminum coupling agent, a polyvalent metal salt compound or other compounds. Furthermore, a treatment with a surfactant, a water-soluble polymer or the like may be carried out during the above-described production processes, or after the final product is obtained. The highly water-absorptive resin used in the present invention may be one which has undergone any of the above treatments.

⟨Fine Powder of Insoluble Inorganic Material⟩

Examples of the fine powder of an insoluble inorganic material used in the present invention include fine powders of silicon dioxide, aluminum oxide, titanium dioxide, calcium phosphate, calcium carbonate, talc, magnesium phosphate, calcium sulfate, diatomaceous earth, bentonite, zeolite and other metal oxides.

Among them, silicon dioxide, aluminum oxide and titanium dioxide are preferred, and a hydrophilic silicon dioxide is particularly preferred.

The particle diameter of the fine powder of an insoluble inorganic material is preferably not more than 100 $\mu$m, particularly preferably not more than 50 $\mu$m.

The amount of the fine powder of an insoluble inorganic material to be used is in the range of from 0.1 to 10 part by weight, preferably in the range of from 0.5 to 5 parts by weight, based on 100 parts by weight of the highly water-absorptive resin powder. When it is less than 0.1 part by weight, the intended effect will not be achieved, while when it exceeds 10 parts by weight, the fine powder has an adverse effect on the water absorption capacity of the granulated resin.

⟨Water-Soluble or Water-Dispersible Polymer Compound⟩

Examples of the water-soluble polymer compound used in the present invention include polyacrylic acid, an alkali metal salt of polyacrylic acid, carboxymethyl cellulose, hydroxyethyl cellulose, polyethylene glycol and polyvinyl alcohol. Among them, preferred is polyvinyl alcohol, particularly one having a saponification value of 80 to 100 and an average degree of polymerization of 300 to 2500.

Examples of the water-dispersible polymer compound used in the present invention include homopolymers of ethylene, butadiene, styrene, isoprene, chloroprene, acrylonitrile, vinyl acetate, vinyl chloride, vinylidene chloride, alkyl alkylate and alkyl methacrylate, copolymers of the above respective monomers, and modified products of the above homopolymers and copolymers. Among them, a modified polyethylene wax, for example, an oxidized polyethylene wax having a molecular weight of 1000 to 4000, polyethylene modified with maleic anhydride and an ethylene-maleic anhydride copolymer are particularly preferred. In many cases, these water-dispersible polymer compounds are used in the form of an oil-in-water type emulsion which may contain an emulsifier and an emulsification assistance.

The water-soluble polymer compound or the water-dispersible polymer compound is used in an amount in the range of from 0.05 to 10 parts by weight, preferably in the range of from 0.1 to 5 parts by weight, based on 100 parts by weight of the highly water-absorptive resin powder. When it is less than 0.05 part by weight or exceeds 10 parts by weight, there is a strong likelihood that the granulated product has no suitable granule diameter, a poor strength or a lowered water absorption capacity.

⟨Water Content of the Resin⟩

Although the amount of water to be added in the process of the present invention may vary depending upon the properties of the highly water-absorptive resin powder, it is preferably such that the water content of the resin powder [water content (%) = amount of water added/(weight of highly water-absorptive resin powder + amount of water added) x 100] is brought to 30 to 70%. When the water content is less than 30%, the granulation efficiency and the strength of the granulated product may be lowered. On the other hand, when the water content exceeds 70%, problems may occur such as occurrence of local blocking, a lowering in drying efficiency and a lowering in water absorption capacity.

《Granulation (Mixing and Drying)》

According to the present invention, in a low-speed paddle mixer, an aqueous solution or a water dispersion containing a water-soluble or water-dispersible polymer is dropwise added to and mixed with a highly water-absorptive resin powder with a fine powder of an insoluble inorganic material being incorporated therein, and the mixture is then dried in a tumbling drier.

The term "low-speed rotary paddle mixer" used herein means "a mixer which has double-screw mixing blades and can conduct agitation and mixing of the contents while applying a suitable shearing force to the contents between the flights of two screws rotating at a rate of 5 to 100 rpm". Specific examples of such a mixer include TB Continuous Kneader (manufactured by To-bu Manufacturing Co., Ltd.) and Double-Screw Feeder (manufactured by Nara Machinery Co., Ltd.).

When the mixing is carried out by using the low-speed rotary paddle mixer, the final granules are more uniform than those obtained by using other types of mixers and, further, the adhesion of the resin to the inner surface of the mixer can be minimized.

The aqueous solution or water dispersion containing a water-soluble or water-dispersible polymer compound may be dropwise added in the form of spray, spot and line.

The term "tumbling drier" used herein means "a drying device which has a vessel and conducts drying of the contents of the vessel while tumbling the contents by rotation or vibration of the vessel per se". Specific examples of the tumbling drier include an inclined pan drier and a rotary drier. The use of the tumbling drier can produce uniform granules in a higher yield as compared with the use of a stationery drier in which lumps are likely to form and with the use of a paddle drier in which a shearing force is likely to be applied to the granulated product, so that the granulated product is likely to be excessively broken.

The granulated product after drying may be further subjected to pulverization and classification for the purpose of regulating the granule size.

The following examples further illustrate the present invention but are not intended to limit it. In the examples, "parts" are by weight.

Example 1

100 parts by weight of a highly water-absorptive resin powder (trade name "Diawet US-50" manufactured by Mitsubishi Petrochemical Co., Ltd.), which is a crosslinked polyacrylic acid salt, was mixed with 1 part of a finely divided silica (average particle diameter: 6 $\mu$m, trade name: "Syloid#63", manufactured by Fuji-Davison Chemical Ltd.) in a ribbon blender. Then, the mixture was placed in Double-Screw Feeder (manufactured by Nara Machinery Co., Ltd.), and 67 parts of an aqueous solution containing 0.5 part of polyvinyl alcohol (saponification value: 88, average degree of polymerization: 1700-2400, trade name "PVA-217", manufactured by Kuraray Co., Ltd.) was added dropwise to the mixture with agitation at 60 rpm. Then, the mixture was dried in a rotary drier (manufactured by Nihon Kansouki Co., Ltd.) under reduced pressure at 100°C for one hour to prepare a granulated product A.

Example 2

A granulated product B was prepared in the same manner as in Example 1, except that 100 parts of a crosslinked graft copolymer of starch and an acrylic acid salt (trade name "Sunwet IM-1000" manufactured by Sanyo Chemical Industries, Ltd.) was used instead of the above resin powder.

Example 3

A granulated product C was prepared in the same manner as in Example 1, except that 1.0 part of a finely divided titanium (average particle diameter: 21 nm, trade name "Aerosil P-25", manufactured by Nippon Aerosil Co., Ltd.) was used instead of the finely divided silica.

Example 4

A granulated product D was prepared in the same manner as in Example 1, except that the amount of the finely divided silica was changed to 0.1 part.

Example 5

A granulated product E was prepared in the same manner as in Example 1, except that the amount of the finely divided silica was changed to 10 parts.

Example 6

A granulated product F was prepared in the same manner as in Example 1, except that 67 parts of a water dispersion (oil-in-water type emulsion) containing 0.50 part of an oxidized polyethylene wax (molecular weight:1400, acid value: 60) was used instead of the aqueous polyvinyl alcohol solution.

Example 7

A granulated product G was prepared in the same manner as in Example 1, except that the amount of polyvinyl alcohol contained in the aqueous polyvinyl alcohol solution was changed to 0.05 part.

Example 8

A granulated product H was prepared in the same manner as in Example 1, except that the amount of polyvinyl alcohol contained in the aqueous polyvinyl alcohol solution was changed to 10 parts.

Example 9

A granulated product I was prepared in the same manner as in Example 1, except that the amount of the aqueous solution containing 0.5 part of polyvinyl alcohol was changed to 42.9 parts.

Example 10

A granulated product J was prepared in the same manner as in Example 1, except that the amount of the aqueous solution containing 0.5 part of polyvinyl alcohol was changed to 233 parts.

Example 11

A granulated product K was prepared in the same manner as in Example 1, except that the rate of agitation in the Double-Screw Feeder was changed to 20 rpm.

Example 12

A granulated product L was prepared in the same manner as in Example 1, except that the rate of agitation in the Double-Screw Feeder was changed to 100 rpm.

Comparative Example 1

67 parts of water was added dropwise to and mixed with 100 parts of the highly water-absorptive resin powder used in Example 1 with agitation at 60 rpm in the Double-Screw Feeder used in Example 1. The mixture was then dried in the rotary drier used in Example 1 under reduced pressure at 100°C for one hour to prepare a granulated product M.

Comparative Example 2

A granulated product N was prepared in the same manner as in Example 1, except that the finely divided silica was not used.

## Comparative Example 3

A granulated product O was prepared in the same manner as in Example 1, except that the amount of the finely divided silica was changed to 20 parts.

## Comparative Example 4

A granulated product P was prepared in the same manner as in Example 1, except that 67 parts of water was used instead of 67 parts of the aqueous polyvinyl alcohol solution.

## Comparative Example 5

A granulated product Q was prepared in the same manner as in Example 1, except that the amount of the aqueous solution containing 0.5 part of polyvinyl alcohol was changed to 25 parts.

## Comparative Example 6

A granulated product R was prepared in the same manner as in Example 1, except that the amount of the aqueous solution containing 0.5 part of polyvinyl alcohol was changed to 400 parts.

## Comparative Example 7

The procedure of Example 1 was repeated, except that the dropwise addition of the aqueous polyvinyl alcohol solution to the mixture of the highly water-absorptive resin powder and the finely divided silica was carried out with agitation at 1000 rpm using Super Mixer (manufactured by Kawata Mfg. Co., Ltd.) instead of the Double-Screw Feeder. One minute after the completion of dropwise addition of the aqueous polyvinyl alcohol, the torque of the mixer began to increase, and the temperature of the mixture rose to 80°C. The mixture was dried in the same manner as in Example 1 to prepare a granulated product S.

## Comparative Example 8

The procedure of Example 1 was repeated, except that the dropwise addition of the aqueous polyvinyl alcohol solution to the mixture of the highly water-absorptive resin powder and the finely divided silica was carried out with agitation at 2000 rpm using Turbulizer (manufactured by Hosokawa Micron Corp.) instead of the Double-Screw Feeder. 30 minutes after the initiation of dropwise addition of the aqueous polyvinyl alcohol solution, a considerable adhesion of the resin to the inner surface of the Turbulizer was observed and it became difficult to continue the operation.

The resultant mixture was dried in the same manner as in Example 1 to prepare a granulated product T.

## Comparative Example 9

A granulated product U was prepared in the same manner as in Example 1, except that the mixture was dried in a stationary drier under reduced pressure at 100°C for one hour.

## Comparative Example 10

A granulated product V was prepared in the same manner as in Example 1, except that the mixture was dried in a paddle drier (manufactured by Tamagawa Machinery Co., Ltd.) under reduced pressure at 100°C for one hour.

The granulated products prepared in the above examples and comparative examples were subjected to the following measurements.

⟨Granulation yield⟩

The weight percentage of granules having a size over 80# according to the ASTM standard sieve was determined as the granulation yield.

⟨Formation of lump⟩

The weight percentage of lumps having a size of not less than 10 mm∅ was determined.

⟨Fracture strength⟩

20 g of a granulated product (having a size over 80# and under 20# according to the ASTM standard sieve) was placed in a cylindrical vessel having an internal volume of 50 cc, and one plastic ball having a diameter of 10 mm was added thereto. The mixture was vigorously shaken by means of a shaker for 5 minutes. Thereafter, the weight percentage of granules having a size under 80# was determined as the fracture strength.

⟨Water absorption capacity⟩

1 g of a granulated product was placed in a 400-mesh nylon bag (of 10 cm x 10 cm), and the nylon bag was then immersed in one liter of 0.9% physiological saline for 30 minutes. Thereafter, the nylon bag was pulled up, drained off for 15 minutes and then weighed. After making blank correction, the water absorption capacity was determined as the weight of the physiological saline absorbed in 1 g of the granulated product.

⟨Rate of water absorption (under atmospheric pressure)⟩

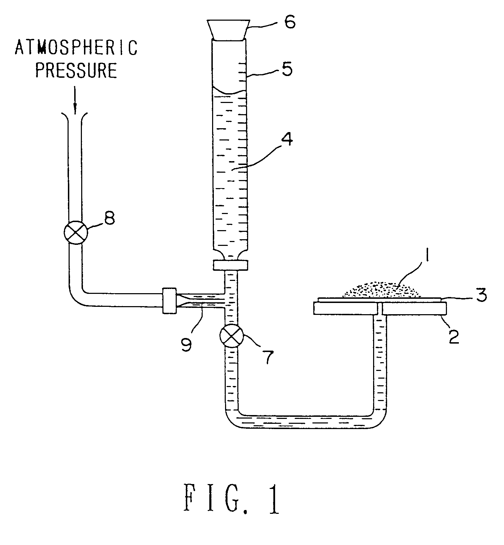

Measurement was carried out by using the device shown in Fig. 1. 1.0 g of a granulated product 1 was placed on a nonwoven fabric 3 spread over a support plate 2 having a small hole, and brought into contact with 0.9% physiological saline 4 as shown in Fig. 1. The rate of water absorption (under atmospheric pressure) was determined as the amount of the physiological saline absorbed in the granulated product 1 for the first 10 minutes.

⟨Rate of water absorption (under pressure)⟩

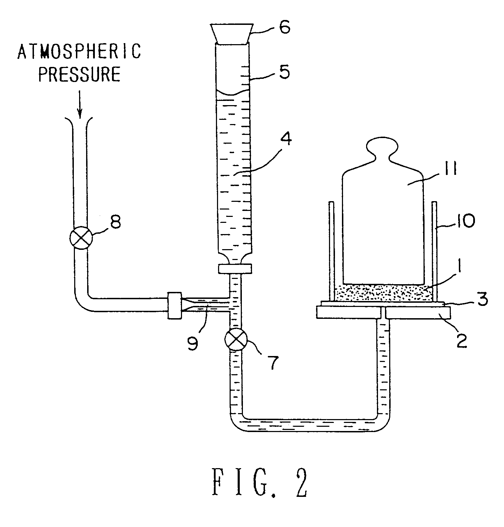

Measurement was carried out by using the device shown in Fig. 2. 1.0 g of a granulated product 1 was placed on a nonwoven fabric 3 spread over a support plate 2 having a small hole, and a guide 10 was provided around the granulated product. A weight 11 (corresponding to 12 g/cm$^2$) was placed on the granulated product 1. The granulated product 1 was brought into contact with 0.9% physiological saline 4 as shown in Fig. 2. The rate of water absorption (under pressure) was determined as the amount of the physiological saline absorbed in the granulated product 1 for the first 10 minutes.

The results of the above measurements are shown in Table 1, together with the results of observation of the adhesion of resin to the inner surface of the mixer/stability in continuous operation. Also shown in Table 1 the data on the water absorption properties as measured for the highly water-absorptive resin powders used in the examples.

Table 1

| Examples/ Comparative Examples | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|
| Granulated product | A | B | C | D | E | F | G | H | I | J | K | L |
| Granulation yield [%] | 99 | 100 | 98 | 96 | 100 | 96 | 97 | 100 | 94 | 100 | 99 | 99 |
| Lump [%] | 3 | 5 | 2 | 2 | 1 | 1 | 2 | 7 | 2 | 10 | 3 | 2 |
| Fracture strength [%] | 1 | 2 | 3 | 5 | 2 | 4 | 2 | 1 | 3 | 1 | 1 | 1 |
| Water absorption capacity [g/g] | 51 | 29 | 48 | 50 | 45 | 50 | 50 | 47 | 50 | 51 | 50 | 51 |
| Rate of water absorption (under atmospheric pressure) | 43 | 11 | 41 | 39 | 40 | 45 | 42 | 41 | 46 | 40 | 43 | 43 |
| Rate of water absorption (under pressure) | 8 | 3 | 9 | 9 | 8 | 11 | 9 | 7 | 10 | 7 | 8 | 8 |
| Adhesion of resin to mixer/stability in continuous operation | ○ | ○ | ○ | ○ | ○ | ○ | ○ | ○ | ○ | ○ | ○ | ○ |

Note: ○ ······· no adhesion of resin/no problem in continuous operation

Table 1 (cont'd)

| Examples/ Comparative Examples | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Untreated resin US-50 | Untreated resin 1M-1000 |
|---|---|---|---|---|---|---|---|---|---|---|---|---|
| Granulated | M | N | O | P | Q | R | S | T | U | V | — | — |
| Granulation yield [%] | 60 | 95 | 99 | 93 | 75 | 100 | 99 | 99 | 85 | 70 | — | — |
| Lump [%] | 0 | 1 | 2 | 1 | 3 | 25 | 70 | 10 | 30 | 0 | — | — |
| Fracture strength [%] | 15 | 7 | 9 | 8 | 8 | 1 | 2 | 10 | 8 | 2 | — | — |
| Water absorption capacity [g/g] | 50 | 50 | 42 | 50 | 50 | 47 | 44 | 45 | 49 | 51 | 50 | 30 |
| Rate of water absorption (under atmospheric pressure) | 45 | 40 | 33 | 44 | 43 | 32 | 30 | 43 | 40 | 43 | 45 | 13 |
| Rate of water absorption (under pressure) | 7 | 9 | 4 | 9 | 9 | 4 | 4 | 8 | 7 | 8 | 10 | 4 |
| Adhesion of resin to mixer/stability in continuous operation | ○ | ○ | ○ | ○ | ○ | *1 △ | *2 x | *3 x | ○ | ○ | — | — |

Note:*1·····some adhesion of resin/continuous operation being possible

*2·····considerable adhesion of resin/increase in torque in 1 minute

*3·····considerable adhesion of resin/continuous operation becoming impossible in 30 minutes

Claims

1. A process for granulating a highly water-absorptive resin, comprising the steps of: placing 100 parts by weight of a highly water-absorptive resin having a crosslinked structure comprising as its constituent a carboxyl group and/or a carboxylate group in a low-speed rotary paddle mixer; dropwise adding and mixing 0.05 to 10 parts by weight of a water-soluble or water-dispersible polymer compound, in the form of an aqueous solution or a water dispersion containing water in such an amount as to bring the water content of said resin to 30 to 70%, with said resin in the presence of 0.1 to 10 parts by weight of a fine powder of an insoluble inorganic material by means of said mixer; and drying the mixture in a tumbling drier.

2. The process according to claim 1, wherein said highly water-absorptive resin is selected from the group consisting of a crosslinked polyacrylic acid salt, a crosslinked graft copolymer of starch and an acrylic acid salt, a saponified product of a crosslinked graft copolymer of starch and acrylonitrile, a saponified product of a crosslinked copolymer of an acrylic ester and vinyl acetate, a crosslinked copolymer of an acrylic acid salt and an acrylic ester, a crosslinked copolymer of an acrylic acid salt and acrylamide, and a hydrolyzate of a crosslinked polyacrylonitrile.

3. The process according to claim 1 or 2, wherein said fine powder of an insoluble inorganic material is a hydrophilic particulate silicon dioxide having an average particle diameter of not more than 100 $\mu$m.

4. The process according to any one of claims 1 to 3, wherein said water-soluble or water-dispersible polymer compound is a polyvinyl alcohol having a saponification value of 80 to 100 and an average degree of polymerization of 300 to 2500 or a modified polyethylene wax having an average molecular weight of 1000 to 4000.

ATMOSPHERIC
PRESSURE

FIG. 1

ATMOSPHERIC
PRESSURE

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | GB-A-2 162 525 (NIPPON SHOKUBAI KAGAKU KOGYO CO. LTD.)<br>* claims 1,7,8,10-13,15 *<br>* page 2, line 50 - line 55 *<br>* page 3, line 23 - line 32 *<br>--- | 1-3 | C08J3/12<br>//C08L101:02 |
| D,A | EP-A-0 224 923 (SEITETSU KAGAKU CO., LTD.)<br>* claims 1-3,9,10 *<br>--- | 1 | |
| A | FR-A-2 646 430 (NIPPON GOHSEI KAGAKU KOGYO KK.)<br>* claims *<br>* page 9, line 25 - page 10, line 20 *<br>----- | 1 | |
| | | | TECHNICAL FIELDS SEARCHED (Int.Cl.6)<br><br>C08J<br>C08L |

The present search report has been drawn up for all claims

| Place of search | Date of completion of the search | Examiner |
|---|---|---|
| THE HAGUE | 29 December 1994 | Niaounakis, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)